# DEMANDE DE BREVET EUROPEEN

(11) **EP 2 642 719 A1**
(43) Date de publication de la demande: **25.09.2013**
(21) Numéro de dépôt: 13158202.5
(22) Date de dépôt: 07.03.2013
(51) Int. Cl.: H04L 29/06

(54) **Procédé et serveur pour le controle de l'usage d'un ensemble de dispositifs**

(30) Priorité: 19.03.2012 FR 1252439
(71) Demandeur: Alcatel Lucent, 75007 Paris (FR)
(72) Inventeur: Perrine, Laurent, 44708 Orvault (FR); Fournier, Thomas, 44708 Orvault (FR); Guyot, Claire, 78141 Velizy (FR); Jaffrelot, Laurent, 44708 Orvault (FR)
(74) Mandataire: Mouney, Jérôme

(57) **Abrégé**

Pour contrôler l'utilisation par un utilisateur d'un ensemble de dispositifs de communication (DC) reliés à un serveur d'application (SA) à travers un réseau de télécommunications (RT), le serveur d'application implémentant un compteur global (CG) qui évalue la durée d'utilisation de l'ensemble des dispositifs de communication et qui est associé à un identificateur (IdU) de l'utilisateur, le serveur d'application reçoit une requête (Req) comprenant l'identificateur (IdU) de l'utilisateur et transmise depuis ledit dispositif de communication (DC), suite à une authentification de l'utilisateur auprès d'un dispositif de communication (DC) et identifie le compteur global (CG) associé à l'identificateur (IdU) de l'utilisateur.

Le serveur d'application détermine une durée d'utilisation autorisée (DuA) en fonction de règles de contrôle (RegG, RegS) associées à l'identificateur (IdU) de l'utilisateur, si le compteur global (CG) est inférieur à une valeur seuil correspondant à une durée maximale donnée, et transmet une réponse (Rep) au dispositif de communication (DC), la réponse comprenant la durée d'utilisation autorisée (DuA), afin d'autoriser l'accès au dispositif de communication (DC) à l'utilisateur pour une durée égale à la durée d'utilisation autorisée (DuA).

## Description

La présente invention concerne un contrôle de l'usage d'un ensemble de dispositifs.

En particulier, l'invention concerne un contrôle parental relatif à plusieurs dispositifs de communication, tels qu'un ordinateur ou un téléviseur, utilisés par exemple par un enfant dont les parents veulent exercer un contrôle sur ledit usage.

Il existe des services de contrôle parental permettant aux parents de configurer des règles de contrôle sur l'utilisation du terminal de leur enfant, lesdites règles étant appliquées afin d'autoriser ou de refuser l'accès à un service demandé par l'enfant au moyen de son terminal. Par exemple, ces règles définissent une liste noire de numéros d'appels ou de services multimédias interdits, et des plages horaires autorisant l'accès à différents services de communication, tels que des appels vocaux ou des transmissions de messages courts ou multimédia. Ces règles peuvent ainsi définir des limites sur la durée d'utilisation du terminal ou sur la quantité de données utilisées. En outre, le système de contrôle parental peut définir des numéros d'exception qui ne peuvent être bloqués, tels que les numéros d'appel d'urgence.

Cependant, il n'existe actuellement aucun service de contrôle parental permettant aux parents de facilement configurer des règles de contrôle pour un ensemble de dispositifs.

Afin de remédier aux inconvénients précités, un procédé pour contrôler l'utilisation par un utilisateur d'un ensemble de dispositifs de communication reliés à un serveur d'application à travers un réseau de télécommunications, le serveur d'application implémentant un compteur global qui évalue la durée d'utilisation de l'ensemble des dispositifs de communication et qui est associé à un identificateur de l'utilisateur, le procédé comprenant les étapes suivantes dans le serveur d'application :
suite à une authentification de l'utilisateur auprès d'un dispositif de communication, recevoir une requête qui comprend l'identificateur de l'utilisateur et qui est transmise depuis ledit dispositif de communication,
identifier le compteur global associé à l'identificateur de l'utilisateur,
si le compteur global est inférieur à une valeur seuil correspondant à une durée maximale donnée, déterminer une durée d'utilisation autorisée en fonction de règles de contrôle associées à l'identificateur de l'utilisateur,
transmettre une réponse au dispositif de communication, la réponse comprenant la durée d'utilisation autorisée, afin d'autoriser l'accès au dispositif de communication à l'utilisateur pour une durée égale à la durée d'utilisation autorisée:

Avantageusement, l'invention permet à un tuteur de configurer de manière centralisée des règles de contrôle pour un ensemble de dispositifs.

Selon une autre caractéristique de l'invention, lorsque l'accès au dispositif de communication est autorisé, une session d'utilisation est ouverte à l'utilisateur pour une durée égale à la durée d'utilisation autorisée, et lorsque la durée d'utilisation autorisée est écoulée, le dispositif de communication transmet un message de notification au serveur d'application indiquant que la session d'utilisation est terminée avant de fermer la session d'utilisation

Selon une autre caractéristique de l'invention, la durée d'utilisation autorisée est déterminée si la date actuelle correspond à une période d'utilisation autorisée de l'ensemble des dispositifs de communication.

Selon une autre caractéristique de l'invention, le compteur global est activé lorsque le serveur d'application transmet la réponse au dispositif de communication et est désactivé lorsque le serveur d'application reçoit le message de notification transmis par le dispositif de communication.

Selon une autre caractéristique de l'invention, les règles de contrôle comprennent des règles de contrôle globales définissant une durée maximale d'utilisation de l'ensemble des dispositifs de communication, la durée d'utilisation autorisée étant déterminée en fonction de ladite durée maximale d'utilisation de l'ensemble des dispositifs de communication et de la valeur du compteur global, la durée d'utilisation autorisée étant en outre inférieure ou égale à la durée maximale d'utilisation de l'ensemble des dispositifs de communication.

Selon une autre caractéristique de l'invention, la requête contient en outre un identificateur du dispositif de communication, le serveur d'application identifie un compteur spécifique associé à l'identificateur du dispositif de communication, et détermine la durée d'utilisation autorisée en fonction en outre de règles de contrôle spécifiques qui définissent une durée maximale d'utilisation dudit dispositif de communication et qui sont associées à l'identificateur du dispositif de communication, la durée d'utilisation autorisée étant déterminée en outre en fonction de ladite durée maximale d'utilisation dudit dispositif de communication et de la valeur du compteur spécifique, la durée d'utilisation autorisée étant en outre inférieure ou égale à la durée maximale d'utilisation dudit dispositif de communication.

Selon une autre caractéristique de l'invention, le compteur spécifique est activé lorsque le serveur d'application transmet la réponse au dispositif de communication et est désactivé lorsque le serveur d'application reçoit le message de notification transmis par le dispositif de communication.

Selon une autre caractéristique de l'invention, le serveur d'application transmet automatiquement un message d'alerte à un terminal d'un tuteur de l'utilisateur lorsque la durée d'utilisation autorisée est écoulée, le message comprenant une indication selon laquelle l'utilisateur a atteint la limite de durée d'utilisation de l'ensemble des dispositifs de communication ou dudit dispositif de communication.

L'invention concerne également un serveur d'application pour contrôler l'utilisation par un utilisateur d'un ensemble de dispositifs de communication reliés au serveur d'application à travers un réseau de télécommunications, le serveur d'application implémentant un compteur global qui évalue la durée d'utilisation de l'ensemble des dispositifs de communication et qui est associé à un identificateur de l'utilisateur, le serveur d'application comprenant :
des moyens pour recevoir une requête qui comprend l'identificateur de l'utilisateur et qui est transmise depuis ledit dispositif de communication, suite à une authentification de l'utilisateur auprès d'un dispositif de communication,
des moyens pour identifier le compteur global associé à l'identificateur de l'utilisateur,
des moyens pour déterminer une durée d'utilisation autorisée en fonction de règles de contrôle associées à l'identificateur de l'utilisateur, si le compteur global est inférieur à une valeur seuil correspondant à une durée maximale donnée,
des moyens pour transmettre une réponse au dispositif de communication, la réponse comprenant la durée d'utilisation autorisée, afin d'autoriser l'accès au dispositif de communication à l'utilisateur pour une durée égale à la durée d'utilisation autorisée.

L'invention se rapporte encore à un programme d'ordinateur apte à être mis en oeuvre dans un serveur d'application, ledit programme comprenant des instructions qui, lorsque le programme est exécuté dans ledit serveur d'application, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un bloc-diagramme schématique d'un système de communication selon une réalisation de l'invention, et
- la figure 2 est un algorithme d'un procédé de contrôle parental selon une réalisation de l'invention.

L'invention est relative à un contrôle parental de l'utilisation d'un ensemble de dispositifs de communication, l'utilisateur d'un tel ensemble pouvant être un enfant ou une personne sous tutelle.

Il est considéré que le contrôle parental lié à l'ensemble de dispositifs de communication est exercé par un tuteur, qui peut être un parent de l'utilisateur dudit ensemble. Par exemple, l'utilisateur d'un dispositif de communication est un enfant et le tuteur est l'ensemble des deux parents de l'enfant.

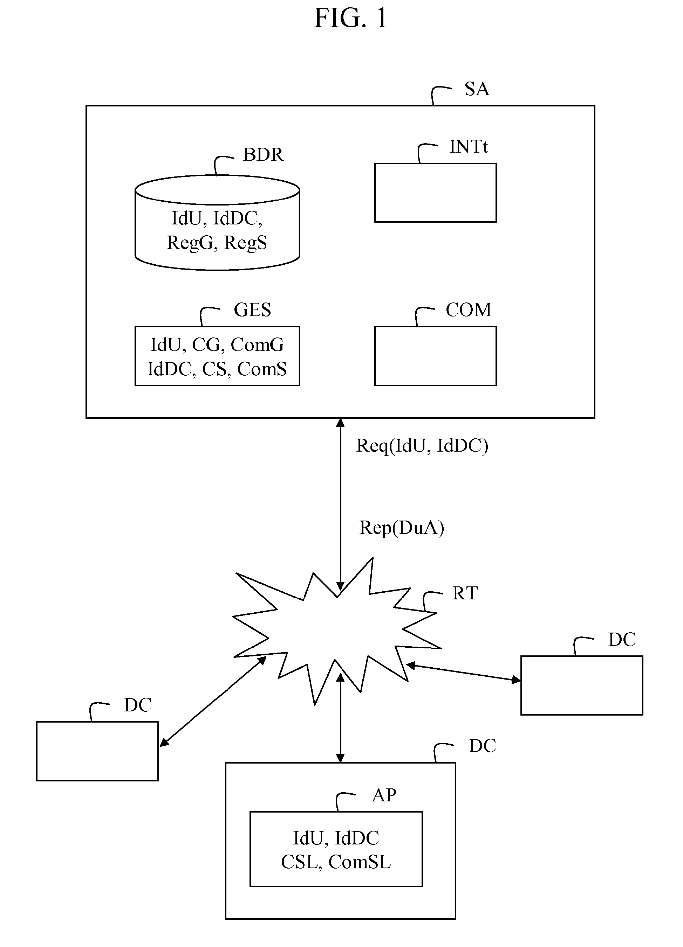

En référence à la figure 1, un système de communication comprend au moins un serveur d'application SA et un ensemble de dispositifs de communication DC, aptes à communiquer entre eux à travers un réseau de télécommunications RT.

Dans la suite de la description, le terme module peut désigner un dispositif, un logiciel ou une combinaison de matériel informatique et de logiciel, configuré pour exécuter au moins une tâche particulière.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

A titre d'exemples non limitatifs, un dispositif de communication DC est un ordinateur personnel, ou un terminal de radiocommunications cellulaire mobile, ou comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone).

Plus généralement, un dispositif de communication DC peut être tout autre terminal domestique communicant portable ou non tel qu'une console de jeux vidéo portable ou de salon, ou un récepteur de télévision intelligent.

Chacun des dispositifs de communication DC est apte à communiquer avec le serveur d'application SA, par exemple via une liaison de type xDSL ("Digital Subscriber Line" en anglais) ou RNIS (Réseau Numérique à Intégration de Services) reliée au réseau de télécommunications RT, ou encore via un canal de radiocommunication, par exemple de type GSM ("Global System for Mobile communications" en anglais) ou UMTS ("Universal Mobile Telecommunications System" en anglais) ou LTE ("Long Term Evolution" en anglais), ou encore via une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais), relié au réseau de télécommunications.

Le terminal de communication et le réseau de télécommunications ne sont pas limités aux exemples ci-dessus et peuvent être constitués par d'autres terminaux connus.

Par souci de clarté, seulement trois dispositifs de communication DC sont représentés à la figure 1.

Dans un exemple illustratif, l'utilisateur possède un ensemble de dispositifs de communication DC comprenant un récepteur de télévision, un ordinateur personnel et une console de jeu portable.

Selon une réalisation de l'invention, une application AP est implémentée dans chaque dispositif de communication DC, par exemple sous forme de programme d'ordinateur. L'application est dédiée au contrôle parental et a pour fonctionnalité de communiquer avec le serveur d'application SA pour configurer le contrôle parental.

Dans une réalisation, l'application présente une interface graphique permettant à l'utilisateur notamment de saisir en outre un identificateur et un mot de passe associé, par exemple textuellement ou vocalement.

Le serveur d'application SA comprend une interface de tuteur INTt, un module de communication COM, et un module de gestion GES. Le serveur d'application SA est lié à une base de données de règles BDR qui est intégrée dans ce dernier ou incorporée dans un serveur de gestion de base de données relié au serveur SA par une liaison locale ou distante.

La base de données de règles BDR comprend des informations relatives à l'invention, telles qu'un identificateur IdU d'utilisateur et des règles de contrôle sur l'utilisation de l'ensemble des dispositifs de communication et sur l'utilisation de chaque dispositif de communication.

Les règles de contrôle peuvent être préalablement configurées par le tuteur pour l'ensemble des dispositifs de communication de leur enfant, par exemple au moyen d'une interface web.

Selon des exemples de réalisation, des règles de contrôle peuvent être configurées pour définir :
- une durée maximale d'utilisation de l'ensemble des dispositifs de communication, ladite durée pouvant être décomposée selon une durée par jour, par nombre de jours, par semaine, et éventuellement par mois. Dans une réalisation, il peut y avoir par exemple une condition sur une durée par jour en parallèle d'une condition sur une durée par semaine.
- une période d'utilisation du dispositif de communication, correspondant à une plage horaire dans une journée et éventuellement à des jours donnés, tels que le samedi et le dimanche.

Dans une réalisation, les règles de contrôle comprennent des règles de contrôle RegG dites globales qui sont appliquées pour l'ensemble des dispositifs de communication, c'est-à-dire qu'une durée d'utilisation par jour peut par exemple être cumulée si l'utilisateur utilise plusieurs dispositifs de communication l'un après l'autre. Optionnellement, les règles de contrôle comprennent des règles de contrôle dites spécifiques RegS qui peuvent être appliquées à chacun des dispositifs de communication en parallèle des règles de contrôle globales. Selon l'exemple illustratif, une durée globale d'utilisation de quatre heures pour une journée peut être appliquée en parallèle d'une durée d'utilisation de deux heures pour un récepteur de télévision, de deux heures pour un ordinateur personnel et d'une heure pour une console de jeu portable, ainsi l'utilisateur ne pourra pas cumuler la totalité des durées d'utilisation de chacun des dispositifs de communication puisqu'elle est supérieure à la durée globale. Par ailleurs, la période d'utilisation peut être associée à l'ensemble des dispositifs de communication et optionnellement une période d'utilisation peut être associée à chacun des dispositifs de communication.

Lorsque l'accès à un dispositif de communication est lancé par l'utilisateur, par exemple suite à une mise sous tension du dispositif de communication, les règles de contrôle sont appliquées afin d'autoriser ou de refuser l'accès au dispositif de communication.

La base de données de règles BDR mémorise ainsi un identificateur IdU d'utilisateur en correspondance avec des identificateurs IdDC de dispositifs de communication et des règles de contrôle globales RegG, chacun des identificateurs IdDC de dispositifs de communication étant en outre mémorisé en correspondance avec des règles de contrôle spécifiques RegS.

L'interface de tuteur INTt offre un espace dans lequel le tuteur peut accéder aux règles de contrôle correspondantes à l'identificateur d'utilisateur IdU, par exemple afin de surveiller l'utilisation des dispositifs de communication et modifier des règles de contrôle.

Optionnellement, l'interface de tuteur INTt transmet automatiquement un message de notification au tuteur, via le module de communication COM, lorsqu'une durée maximale d'utilisation associée à l'ensemble de dispositifs de communication est atteinte. Le message de notification est par exemple un message court SMS ("Short Message Service" en anglais) transmis à un terminal mobile du tuteur.

Le serveur d'application SA reçoit, via le module de communication COM, des requêtes Req transmises depuis le dispositif de communication DC afin d'autoriser ou refuser l'accès au dispositif de communication.

Une requête Req comprend un identificateur IdDC du dispositif de communication DC et un identificateur IdU de l'utilisateur. L'identificateur IdU de l'utilisateur peut par exemple découler de l'identifiant associé au mot de passe.

Le module de gestion GES récupère l'identificateur IdU de l'utilisateur et l'identificateur IdDC du dispositif de communication DC afin de retrouver les règles de contrôle correspondantes dans la base de données.

Le module de gestion GES implémente en outre un compteur global CG et un compteur spécifique CS évaluant la durée d'utilisation des dispositifs de communication selon une unité de temps prédéfinie et ayant pour valeur respectivement un compte global ComG et un compte spécifique ComS. Un compte du compteur sera entendu comme la valeur du compteur à un instant donné et les différents comptes du compteur peuvent correspondre aux différentes valeurs que peut prendre le compteur. Par commodité, il est considéré que l'unité de temps prédéfinie utilisée par les comptes est la même que celle utilisée par les règles de contrôle. L'identificateur IdU de l'utilisateur est associé au compte global ComG et chaque identificateur IdDC de dispositif de communication DC est associé à un compte spécifique ComS.

Le serveur d'application SA transmet, via le module de communication COM, des réponses Rep aux requêtes Req vers le dispositif de communication DC indiquant un refus d'accès au dispositif de communication ou une autorisation avec une durée d'utilisation autorisée DuA.

Par ailleurs, chaque dispositif de communication DC implémente également un compteur spécifique local CSL évaluant la durée d'utilisation du dispositif de communication et ayant pour valeur un compte spécifique local ComSL. Les compteurs CS et CSL sont synchronisés lors des échanges entre le dispositif de communication DC et le serveur d'application SA.

Une fois que l'utilisateur est authentifié pour utiliser le dispositif de communication DC, c'est-à-dire une fois qu'il a fourni son identificateur et son mot de passe associé, l'application AP transmet une requête Req au serveur d'application SA et reçoit une réponse Rep indiquant le refus ou une autorisation avec une durée d'utilisation autorisée DuA. Si la réponse Rep contient une autorisation avec ladite durée autorisée, le compteur spécifique local CSL est enclenché jusqu'à ce que le compte spécifique local ComSL atteigne une valeur correspondant à la durée d'utilisation autorisée DuA. Selon l'implémentation choisie, le compte peut être incrémenté ou décrémenté, mais atteint dans tous les cas une valeur seuil correspondant à une durée donnée.

Dans le cas où le dispositif de communication DC ne peut se connecter au serveur d'application SA, l'application App peut être configurée pour empêcher toute ouverture de session ou pour ouvrir une session avec une durée limitée prédéfinie après une authentification de l'utilisateur au moyen d'un mot de passe prédéfini.

Optionnellement, les règles de contrôle globales RegG et spécifiques RegS peuvent dépendre d'une zone géographique dans laquelle sont situés les dispositifs de communication. Dans ce cas, la requête Req transmise au serveur d'application SA peut comprendre une information de géolocalisation, ou en variante le serveur d'application SA reçoit un message comprenant une information de géolocalisation depuis un serveur de localisation apte à localiser le dispositif de communication DC. En outre, le contenu applicable des règles de contrôle globales RegG et spécifiques RegS peut dépendre de la date courante de l'utilisation d'un dispositif de communication ou plus généralement d'autres données temporelles telles que l'heure, le jour de la semaine, des vacances programmées.

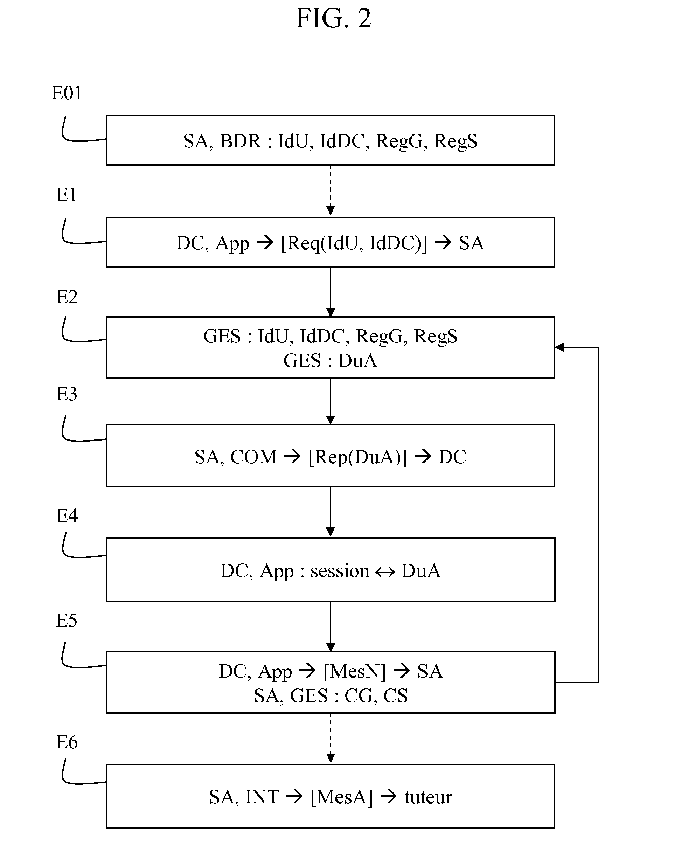

En référence à la figure 2, un procédé de contrôle parental selon une réalisation de l'invention comprend des étapes E1 à E6 exécutées dans le système de communication.

A une étape initiale E01, il est considéré qu'un tuteur, tel qu'un parent, a souscrit à un service de contrôle parental vis-à-vis d'un utilisateur d'un ensemble de dispositifs de communication DC, tel qu'un enfant. L'interface de tuteur INTt du serveur d'application SA invite le tuteur à renseigner un identificateur d'utilisateur IdU et un identificateur IdDC pour chacun des dispositifs de communication DC, aini qu'à définir des règles de contrôle globales RegG et des règles de contrôle spécifiques RegS, les identificateurs IdU et IdDC et les règles de contrôles RegG et RegS étant mémorisées dans la base de données de règles BDR.

En outre, une application AP est installée dans chacun des dispositifs de communication DC, l'application AP mémorisant notamment l'identificateur d'utilisateur IdU et une adresse du serveur d'application SA afin de communiquer avec ce dernier. L'identificateur d'utilisateur IdU est mémorisé en correspondance avec un identifiant tel qu'un "login" de l'utilisateur.

A l'étape E1, l'utilisateur souhaite utiliser un dispositif de communication DC et est invité à fournir un identifiant et un mot de passe. Une fois l'utilisateur authentifié, l'application AP récupère l'identificateur d'utilisateur IdU et l'adresse du serveur d'application SA, et transmet une requête Req au serveur d'application SA, la requête comprenant l'identificateur IdDC du dispositif de communication DC et l'identificateur IdU de l'utilisateur

A l'étape E2, le module de communication COM du serveur d'application SA reçoit la requête Req.

Le module de gestion GES accède à la base de données BDR pour récupérer des règles de contrôle globales RegG associées à l'identificateur IdU de l'utilisateur et des règles de contrôle spécifiques RegS associées à l'identificateur IdDC de dispositif de communication DC.

Le module de gestion GES identifie en outre le compte global ComG associé à l'identificateur IdU de l'utilisateur et le compte spécifique ComS associé à l'identificateur IdDC du dispositif de communication DC.

Le module de gestion GES détermine une durée d'utilisation autorisée DuA en fonction des règles de contrôle globales RegG et spécifiques RegS, notamment en fonction d'une durée maximale d'utilisation de l'ensemble des dispositifs de communication et d'une durée maximale d'utilisation spécifique au dispositif de communication, ainsi qu'en fonction de l'état des comptes ComG et ComS, et vérifie si la date actuelle correspond à la période d'utilisation du dispositif de communication.

Si les conditions relatives aux règles de contrôle sont satisfaites, c'est-à-dire si les comptes ComG et ComS n'ont pas atteint de valeur seuil correspondant à une durée maximale donnée et si la période d'utilisation est considérée correcte, le module de gestion GES produit une réponse Rep comprenant une indication que l'utilisation du dispositif de communication est autorisée pour la durée DuA et active à nouveau le compteur global CG et le compteur spécifique CS. Il est considéré que la durée d'utilisation autorisée DuA est inférieure ou égale à la durée maximale d'utilisation de l'ensemble des dispositifs de communication ou à la durée maximale d'utilisation spécifique à un dispositif de communication selon les règles de contrôle sélectionnées. Si les conditions relatives aux règles de contrôle ne sont pas satisfaites, le module de gestion GES produit une réponse Rep comprenant une indication que l'utilisation du dispositif de communication est refusée. Par ailleurs, tant que les conditions relatives aux règles de contrôle ne sont pas satisfaites, l'utilisateur ne pourra utiliser aucun dispositif de communication DC.

A l'étape E3, le module de communication COM du serveur d'application SA transmet la réponse Rep au dispositif de communication DC, la réponse comprenant la durée d'utilisation autorisée DuA.

A l'étape E4, l'application App autorise l'accès au dispositif de communication DC à l'utilisateur, en d'autres termes l'application App ouvre une session d'utilisation à l'utilisateur pour une durée égale à la durée d'utilisation autorisée DuA.

L'application App déclenche à nouveau le compteur spécifique local CSL. Le compteur spécifique local CSL est actualisé tant que la session d'utilisation est ouverte, jusqu'à ce que la session d'utilisation soit fermée par l'utilisateur ou soit fermée par l'application App lorsque le compteur spécifique local CSL a atteint une valeur correspondant à la durée d'utilisation autorisée DuA.

A l'étape E5, une fois que la durée d'utilisation autorisée DuA est écoulée et avant que la session d'utilisation soit fermée, l'application App transmet un message de notification MesN au serveur d'application SA indiquant que la session d'utilisation est terminée. Optionnellement, le message de notification MesN comprend le compte spécifique local ComSL.

Le module de gestion GES arrête alors le compteur global CG, ainsi que le compteur spécifique CS, ce dernier pouvant optionnellement être actualisé à l'aide du compte spécifique local ComSL reçu.

A l'étape E6 optionnelle, l'interface de tuteur INTt transmet automatiquement un message d'alerte MesA à un terminal du tuteur, via le module de communication COM, après qu'un message de notification MesN a été reçu depuis le dispositif de communication DC dans le cas où la session d'utilisation a été fermée par l'application App lorsque la durée d'utilisation autorisée (DuA) est écoulée. Par exemple, le message d'alerte MesA comprend une indication selon laquelle l'utilisateur a atteint la limite de durée d'utilisation de l'ensemble des dispositifs de communication ou dudit dispositif de communication DC et le tuteur peut éventuellement se connecter au serveur d'application SA afin de modifier une règle de contrôle dans le but par exemple de prolonger une durée d'utilisation.

Les étapes E1 à E5 peuvent être réitérées tant qu'une durée maximale d'utilisation pour l'ensemble de dispositifs de communication n'a pas été atteinte, par exemple lorsque la session d'utilisation est fermée par l'utilisateur ou lorsque la session est fermée par l'application App dans le cas où une durée maximale d'utilisation spécifique au dispositif de communication est atteinte.

Dans le cas d'une réitération, par exemple selon une réalisation dans laquelle un crédit de temps est alloué par le serveur d'application à un dispositif de communication et que ce dernier requiert à nouveau du crédit de temps, le message de notification MesN peut être confondu avec une requête Req.

L'invention est décrite pour un utilisateur donné, mais peut être étendue pour plusieurs utilisateurs, par exemple plusieurs enfants d'une même famille, utilisant certains dispositifs de communication en commun. Dans ce cas, un même identificateur IdDC de dispositif de communication peut être associé à plusieurs identificateurs IdU d'utilisateur.

Par ailleurs, plusieurs dispositifs de communication DC peuvent être utilisés en parallèle par le même utilisateur, par exemple un récepteur de télévision et une console de jeu portable. Dans ce cas, l'actualisation du compteur global CG n'est pas cumulée pour l'utilisation en parallèle des dispositifs de communication mais continue tant qu'au moins un dispositif de communication a une session d'utilisation ouverte. Par contre, chaque compteur spécifique associé aux dispositifs de communication utilisés en parallèle est actualisé.

L'invention décrite ici concerne un procédé et un serveur pour contrôler l'utilisation d'un ensemble de dispositifs de communication. Selon une implémentation de l'invention, les étapes du procédé de l'invention sont déterminées par les instructions d'un programme d'ordinateur incorporé dans un serveur, tel que le serveur d'application SA. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour contrôler l'utilisation par un utilisateur d'un ensemble de dispositifs de communication (DC) reliés à un serveur d'application (SA) à travers un réseau de télécommunications (RT), le serveur d'application (SA) implémentant un compteur global (CG) qui évalue la durée d'utilisation de l'ensemble des dispositifs de communication et qui est associé à un identificateur (IdU) de l'utilisateur, le procédé comprenant les étapes suivantes dans le serveur d'application (SA) :
suite à une authentification de l'utilisateur auprès d'un dispositif de communication (DC), recevoir (E1) une requête (Req) qui comprend l'identificateur (IdU) de l'utilisateur et un identificateur (IdDC) du dispositif de communication (DC) et qui est transmise depuis ledit dispositif de communication (DC),
identifier (E2) le compteur global (CG) associé à l'identificateur (IdU) de l'utilisateur et un compteur spécifique (CS) associé à l'identificateur (IdDC) du dispositif de communication,
si le compteur global (CG) est inférieur à une valeur seuil correspondant à une durée maximale donnée, déterminer (E2) une durée d'utilisation autorisée (DuA) en fonction de règles de contrôle (RegG, RegS) associées à l'identificateur (IdU) de l'utilisateur et en fonction en outre de règles de contrôle spécifiques (RegS) qui définissent une durée maximale d'utilisation dudit dispositif de communication (DC) et qui sont associées à l'identificateur (IdDC) du dispositif de communication, la durée d'utilisation autorisée (DuA) étant déterminée en outre en fonction de ladite durée maximale d'utilisation dudit dispositif de communication (DC) et de la valeur du compteur spécifique (CS), la durée d'utilisation autorisée (DuA) étant en outre inférieure ou égale à la durée maximale d'utilisation dudit dispositif de communication (DC),
transmettre (E3) une réponse (Rep) au dispositif de communication (DC), la réponse comprenant la durée d'utilisation autorisée (DuA), afin d'autoriser (E4) l'accès au dispositif de communication (DC) à l'utilisateur pour une durée égale à la durée d'utilisation autorisée (DuA).

2. Procédé conforme à la revendication 1, selon lequel, lorsque l'accès au dispositif de communication (DC) est autorisé, une session d'utilisation est ouverte à l'utilisateur pour une durée égale à la durée d'utilisation autorisée (DuA), et lorsque la durée d'utilisation autorisée (DuA) est écoulée, le dispositif de communication (DC) transmet un message de notification (MesN) au serveur d'application (SA) indiquant que la session d'utilisation est terminée avant de fermer la session d'utilisation.

3. Procédé conforme à la revendication 1 ou 2, selon lequel la durée d'utilisation autorisée (DuA) est déterminée si la date actuelle correspond à une période d'utilisation autorisée de l'ensemble des dispositifs de communication (DC).

4. Procédé conforme à la revendication 3, selon lequel le compteur global (CG) est activé lorsque le serveur d'application (SA) transmet la réponse (Rep) au dispositif de communication (DC) et est désactivé lorsque le serveur d'application (SA) reçoit le message de notification (MesN) transmis par le dispositif de communication (DC).

5. Procédé conforme à l'une des revendications 1 à 4, selon lequel les règles de contrôle comprennent des règles de contrôle globales (RegG) définissant une durée maximale d'utilisation de l'ensemble des dispositifs de communication, la durée d'utilisation autorisée (DuA) étant déterminée en fonction de ladite durée maximale d'utilisation de l'ensemble des dispositifs de communication et de la valeur du compteur global (CG), la durée d'utilisation autorisée (DuA) étant en outre inférieure ou égale à la durée maximale d'utilisation de l'ensemble des dispositifs de communication.

6. Procédé conforme à à l'une des revendications 1 à 5, selon lequel le compteur spécifique (CS) est activé lorsque le serveur d'application (SA) transmet la réponse (Rep) au dispositif de communication (DC) et est désactivé lorsque le serveur d'application (SA) reçoit le message de notification (MesN) transmis par le dispositif de communication (DC).

7. Procédé conforme à l'une des revendications 1 à 6, selon lequel le serveur d'application (SA) transmet automatiquement un message d'alerte (MesA) à un terminal d'un tuteur de l'utilisateur lorsque la durée d'utilisation autorisée (DuA) est écoulée, le message (MesA) comprenant une indication selon laquelle l'utilisateur a atteint la limite de durée d'utilisation de l'ensemble des dispositifs de communication ou dudit dispositif de communication (DC).

8. Serveur d'application (SA) pour contrôler l'utilisation par un utilisateur d'un ensemble de dispositifs de communication (DC) reliés au serveur d'application (SA) à travers un réseau de télécommunications (RT), le serveur d'application (SA) implémentant un compteur global (CG) qui évalue la durée d'utilisation de l'ensemble des dispositifs de communication et qui est associé à un identificateur (IdU) de l'utilisateur, le serveur d'application (SA) comprenant :
des moyens (COM) pour recevoir une requête (Req) qui comprend l'identificateur (IdU) de l'utilisateur et un identificateur (IdDC) du dispositif de communication (DC) et qui est transmise depuis ledit dispositif de communication (DC), suite à une authentification de l'utilisateur auprès d'un dispositif de communication (DC),
des moyens (GES) pour identifier le compteur global (CG) associé à l'identificateur (IdU) de l'utilisateur et un compteur spécifique (CS) associé à l'identificateur (IdDC) du dispositif de communication,
des moyens (GES) pour déterminer une durée d'utilisation autorisée (DuA) en fonction de règles de contrôle (RegG, RegS) associées à l'identificateur (IdU) de l'utilisateur et en fonction en outre de règles de contrôle spécifiques (RegS) qui définissent une durée maximale d'utilisation dudit dispositif de communication (DC) et qui sont associées à l'identificateur (IdDC) du dispositif de communication, la durée d'utilisation autorisée (DuA) étant déterminée en outre en fonction de ladite durée maximale d'utilisation dudit dispositif de communication (DC) et de la valeur du compteur spécifique (CS), la durée d'utilisation autorisée (DuA) étant en outre inférieure ou égale à la durée maximale d'utilisation dudit dispositif de communication (DC), si le compteur global (CG) est inférieur à une valeur seuil correspondant à une durée maximale donnée,
des moyens (COM) pour transmettre une réponse (Rep) au dispositif de communication (DC), la réponse comprenant la durée d'utilisation autorisée (DuA), afin d'autoriser l'accès au dispositif de communication (DC) à l'utilisateur pour une durée égale à la durée d'utilisation autorisée (DuA).

9. Programme d'ordinateur apte à être mis en oeuvre dans un serveur d'application (SA) pour contrôler l'utilisation par un utilisateur d'un ensemble de dispositifs de communication (DC) reliés à un serveur d'application (SA) à travers un réseau de télécommunications (RT), le serveur d'application (SA) implémentant un compteur global (CG) qui évalue la durée d'utilisation de l'ensemble des dispositifs de communication et qui est associé à un identificateur (IdU) de l'utilisateur, ledit programme étant **caractérisé en ce qu'il** comprend des instructions qui, lorsque le programme est chargé et exécuté dans ledit serveur d'application, réalisent les étapes suivantes :
suite à une authentification de l'utilisateur auprès d'un dispositif de communication (DC), recevoir (E1) une requête (Req) qui comprend l'identificateur (IdU) de l'utilisateur et un identificateur (IdDC) du dispositif de communication (DC) et qui est transmise depuis ledit dispositif de communication (DC),
identifier (E2) le compteur global (CG) associé à l'identificateur (IdU) de l'utilisateur et un compteur spécifique (CS) associé à l'identificateur (IdDC) du dispositif de communication,
si le compteur global (CG) est inférieur à une valeur seuil correspondant à une durée maximale donnée, déterminer (E2) une durée d'utilisation autorisée (DuA) en fonction de règles de contrôle (RegG, RegS) associées à l'identificateur (IdU) de l'utilisateur et en fonction en outre de règles de contrôle spécifiques (RegS) qui définissent une durée maximale d'utilisation dudit dispositif de communication (DC) et qui sont associées à l'identificateur (IdDC) du dispositif de communication, la durée d'utilisation autorisée (DuA) étant déterminée en outre en fonction de ladite durée maximale d'utilisation dudit dispositif de communication (DC) et de la valeur du compteur spécifique (CS), la durée d'utilisation autorisée (DuA) étant en outre inférieure ou égale à la durée maximale d'utilisation dudit dispositif de communication (DC),
transmettre (E3) une réponse (Rep) au dispositif de communication (DC), la réponse comprenant la durée d'utilisation autorisée (DuA), afin d'autoriser (E4) l'accès au dispositif de communication (DC) à l'utilisateur pour une durée égale à la durée d'utilisation autorisée (DuA).
